# EUROPEAN PATENT SPECIFICATION

(11) **EP 3 470 210 B1**
(45) Date of publication and mention of the grant of the patent: **09.09.2020**
(21) Application number: 18184595.9
(22) Date of filing: 20.07.2018
(51) Int. Cl.: B29C 64/277, B29C 64/124, B33Y 30/00

(54) **THREE-DIMENSIONAL PRINTING APPARATUS**
VORRICHTUNG ZUM DREIDIMENSIONALEN DRUCKEN
IMPRIMANTE TRIDIMENSIONNELLE

(30) Priority: 16.10.2017 CN 201710957270
(43) Date of publication of application: 17.04.2019
(73) Proprietor: XYZprinting, Inc., New Taipei City 22201 (TW); Kinpo Electronics, Inc., New Taipei City 22201 (TW)
(72) Inventor: Lee, Wei-Hua, 22201 New Taipei City (TW); Kuo, Tsung-Hua, 22201 New Taipei City (TW); Ding, Ming-Hsiung, 22201 New Taipei City (TW)
(74) Representative: 2K Patentanwälte Blasberg Kewitz & Reichel

(56) References cited:
- JP-A- 2004 223 774
- US-A1- 2002 051 141

## Description

### BACKGROUND OF THE INVENTION

### Field of the Invention

The invention relates to a three-dimensional printing apparatus.

### Description of Related Art

In recent years, along with rapid development of technology, different methods for constructing three-dimensional (3D) models by using additive manufacturing technology such as layer-by-layer model constructing, etc. have been developed. Generally, the additive manufacturing technology is to convert design data of a 3D model constructed by software of computer aided design (CAD), etc. into a plurality of continuously stacked thin (quasi two-dimensional (2D)) cross-section layers. Meanwhile, a plurality of technical means for forming a plurality of the thin cross-section layer is gradually provided.
US2002051141 (A1) discloses a printer including an image area sensor for picking up a picture frame in photo film to output image data. A printing projecting lens focuses and records a print frame to color photographic paper.
JP2004223774 (A) discloses a lens group wherein a large number of fine lenses each of which has a focus at a position extremely near to the surface of the lens is used and the light from a light source is condensed and applied to the lens group corresponding to a desired shape desired to be cured to cure a photo-setting resin in a spotted state. The spot of the light is successively moved in an X- or Y-direction to connect spot-like cured parts in a planar state to form a thin film corresponding to one layer.
For example, a printing module of a 3D printing apparatus generally moves above a printing platform along an XY plane according to spatial coordinates XYZ constructed by the design data of the 3D model, such that a constructing material may form a correct shape of the cross-section layer. The deposited constructing material (i.e. a working liquid) may be cured through irradiation of light, so as to form the desired cross-section layer. Therefore, by moving the printing module layer-by-layer along a Z-axis, a plurality of the cross-section layers are gradually stacked along the Z-axis, such that the constructing material forms a 3D printing object under a layer-by-layer curing condition. However, a light source of the 3D printing apparatus probably decays along with increase of the number of times of usage and a usage time. When the light source decays, an intensity of the light irradiating the constructing material (i.e. the working liquid) is reduced, which influences the quality of the 3D printing object.

### SUMMARY OF THE INVENTION

The invention is directed to a 3D printing apparatus, which has good printing quality. The invention is defined by the combination of features of claim 1.

An embodiment of the invention according to claim 1 provides a 3D printing apparatus including a light source, a digital micromirror device, a projection lens and a photo sensor. The light source emits a light. The digital micromirror device is disposed on a transmission path of the light, and has a plurality of first micromirrors and a plurality of second micromirrors. The first micromirrors reflect a first part of the light to the projection lens. The projection lens projects the first part of the light to a working liquid to cure the working liquid. The second micromirrors reflect a second part of the light to an outside of the projection lens. The photo sensor is disposed on a transmission path of the second part of the light.

In the 3D printing apparatus of an embodiment of the invention, the 3D printing apparatus further includes a first light absorbing device. The photo sensor is disposed on the first light absorbing device.

In the 3D printing apparatus of an embodiment of the invention, the first light absorbing device is adapted to rotate to adjust an included angle between the second part of the light and a normal direction of a light receiving surface of the photo sensor.

In the 3D printing apparatus of an embodiment of the invention, the 3D printing apparatus further includes a second light absorbing device. The second light absorbing device is disposed on the transmission path of the second part of the light reflected by the photo sensor.

In the 3D printing apparatus of an embodiment of the invention, the second light absorbing device is located between the projection lens and the first light absorbing device.

In the 3D printing apparatus of an embodiment of the invention, a light absorbing surface of the second light absorbing device includes at least one of a plane or a curved surface.

In the 3D printing apparatus of an embodiment of the invention, the curved surface includes a concave surface.

In the 3D printing apparatus of an embodiment of the invention, the 3D printing apparatus further includes an optical device. The optical device is disposed on the transmission path of the light. The optical device reflects the light coming from the light source to the digital micromirror device. The first part of the light passes through the optical device and is transmitted to the projection lens.

In the 3D printing apparatus of an embodiment of the invention, the 3D printing apparatus further includes a light uniforming device and a light converging device. The light uniforming device is disposed on the transmission path of the light, and is located between the light source and the optical device. The light converging device is disposed on the transmission path of the light, and is located between the light uniforming device and the optical device.

In the 3D printing apparatus of an embodiment of the invention, the photo sensor is not disposed on the transmission path of the first part of the light transmitted to the projection lens.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a 3D printing apparatus according to an embodiment of the invention.
FIG. 2 is an enlarged view of a digital micromirror device (DMD), a projection lens and a photo sensor of the 3D printing apparatus of FIG. 1.
FIG. 3 is an enlarged view of the projection lens, the photo sensor, a first light absorbing device and a second light absorbing device of the 3D printing device of FIG. 1.
FIG. 4 illustrates rotation of the first light absorbing device of FIG. 3.
FIG. 5 is an enlarged view of the projection lens, the photo sensor, the first light absorbing device and a second light absorbing device of the 3D printing device according to another embodiment of the invention.
FIG. 6 is an enlarged view of the projection lens, the photo sensor, the first light absorbing device and a second light absorbing device of the 3D printing device according to still another embodiment of the invention.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

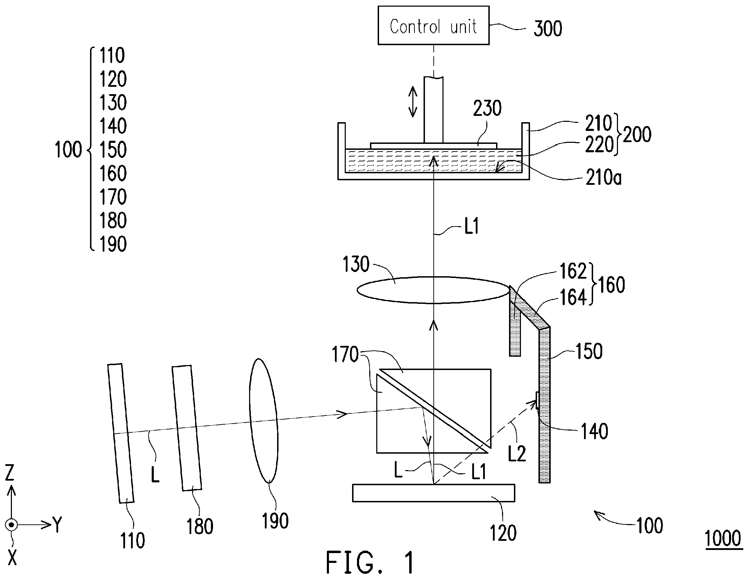

FIG. 1 is a schematic diagram of a 3D printing apparatus according to an embodiment of the invention. Cartesian coordinates X-Y-Z are provided here to facilitate describing FIG. 1. Referring to FIG. 1, the 3D printing apparatus 1000 is, for example, a stereo lithography (SL) apparatus. The 3D printing apparatus 1000 includes a projection unit 100 and a forming unit 200. In the present embodiment, the forming unit 200 includes a tank 210, a working liquid 220 and a forming platform 230. The tank 210 is used for containing the working liquid 220. The forming platform 230 is movably disposed in the tank 210. For example, the forming platform 230 may be moved along a Z-axis direction, so as to move relative to the tank 210 located on an XY plane, and the forming platform 230 may be dipped into the working liquid 220. The projection unit 100 is disposed beside the tank 210. The projection unit 100 emits a first part of light L1 (i.e. an image light). The first part of light L1 irradiates the working liquid 220 to cure the working liquid 220 layer-by-layer, so as to from a 3D printing object. Further, in the present embodiment, the 3D printing apparatus 1000 further includes a control unit 300. The control unit 300 may control the forming platform 230 to move along the Z-axis direction, such that the forming platform 230 may be moved out of or moved into the tank 210 and dipped into the working liquid 220. During the 3D printing process, the forming platform 230 is controlled by the control unit 300 and dipped into the working liquid 220 and keeps a distance with an internal bottom 210a of the tank 210. Now, the projection unit 100 is controlled by the control unit 300 to emit the first part of light L1 to irradiate and cure the working liquid 220 located between the forming platform 230 and the internal bottom 210a of the tank 210, so as to form a layer of cured layer. Thereafter, as the forming platform 230 is controlled by the control unit 300 to gradually depart from the internal bottom 210a of the tank 210, the projection unit 100 irradiates the working liquid 220 located between the cured layer and the internal bottom 210a, multilayer of the stacked cured layers are gradually formed on the forming platform 230. After the forming platform 230 leaves the working liquid 220 in the tank 210, the 3D printing object formed by stacking the multilayer of cured layers is completed.

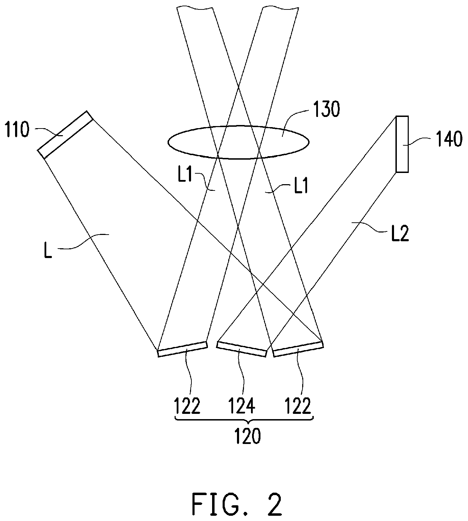

Referring to FIG. 1, the projection unit 100 includes a light source 110, a digital micromirror device (DMD) 120, a projection lens 130 and a photo sensor 140. FIG. 2 is an enlarged view of the DMD 120, the projection lens 130 and the photo sensor 140 of the 3D printing apparatus 1000 of FIG. 1. Referring to FIG. 1 and FIG. 2, the light source 110 emits a light L. The DMD 120 is disposed on a transmission path of the light L, and has a plurality of first micromirrors 122 and a plurality of second micromirrors 124. The first micromirrors 122 are located at an ON position, and the second micromirrors 124 are located at an OFF position. The light L includes a first part of light L1 irradiating the first micromirrors 122 and a second part of light L2 irradiating the second micromirrors 124. The first micromirrors 122 reflect the first part of light L1 to the projection lens 130. The projection lens 130 projects the first part of light L1 to the working liquid 220 to cure the working liquid 220, so as to form the 3D printing object. The first part of light L1 is the image light. The second micromirrors 124 reflect the second part of light L2 to the outside of the projection lens 130. The second part of light L2 is a non-image light. The photo sensor 140 is disposed on a transmission path of the second part of light L2 to sense an intensity of the second part of light L2.

By monitoring the intensity of the second part of light L2 measured by the photo sensor 140, it may be indirectly determined whether an intensity of the light L emitted by the light source 110 is decayed. If it is determined that the intensity of the light L is decayed, an electric signal that drives the light source 110 may be adjusted (or through other method) to increase the intensity of the light L to an ideal value. In this way, during the 3D printing process, the intensity of the first part of light L1 projected to the working liquid 220 may be maintained to an ideal value, so as to print the stable 3D printing object with good quality. More importantly, since the photo sensor 140 is disposed on the transmission path of the second part of light L2 (i.e. the non-image light), allocation of the photo sensor 140 does not influence an image resolution and/or an image range of the image projected by the projection unit 100. In other words, the 3D printing apparatus 100 may monitor the intensity of the light L emitted by the light source 110 in real-time under a premise of not reducing a printing resolution and/or printing range, so as to print the stable 3D printing object with good quality.

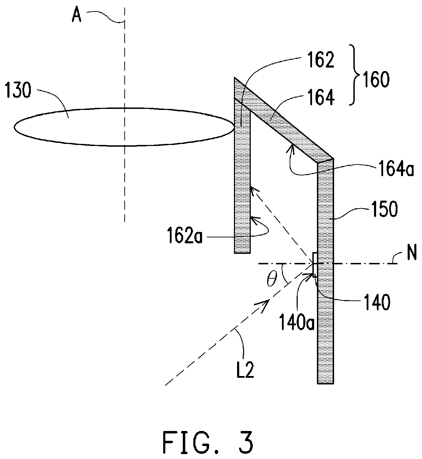

FIG. 3 is an enlarged view of the projection lens 130, the photo sensor 140, a first light absorbing device 150 and a second light absorbing device 160 of the 3D printing device 1000 of FIG. 1. Referring to FIG. 1 and FIG. 3, in the present embodiment, the 3D printing apparatus 1000 further includes the first light absorbing device 150. The first light absorbing device 150 is disposed on the transmission path of the second part of light L2. The first light absorbing device 150 is adapted to absorb the second part of light L2 transmitted thereto, so as to suppress reflection of the second part of light L2. The 3D printing apparatus 1000 further includes a housing (not shown), and the projection unit 110 is disposed in the housing. For example, in the present embodiment, the first light absorbing device 150 may be a part of the housing and a painting with a dull color (for example, dark color) coated on an inner wall of the part of housing. However, the invention is not limited thereto, and in other embodiments, the first light absorbing device 150 may also be other suitable types of light absorbing device. In the present embodiment, the photo sensor 140 may be disposed on the first light absorbing device 150. However, the invention is not limited thereto, and in other embodiments, the photo sensor 140 may also be disposed at other proper positions.

In the present embodiment, the 3D printing apparatus 1000 may further include the second light absorbing device 160. The second light absorbing device 160 is disposed on the transmission path of the second part of light L2 reflected by the photo sensor 140. For example, the second light absorbing device 160 may be disposed between the projection lens 130 and the first light absorbing device 150. The second light absorbing device 160 may absorb the second part of light L2 reflected by the photo sensor 140 to avoid a situation that the second part of light L2 reflected by the photo sensor 140 enters the working liquid 220 to influence the printing quality. In the present embodiment, the second light absorbing device 160 may include a first light absorbing portion 162 and a second light absorbing portion 164. The first light absorbing portion 162 is disposed beside the projection lens 130. The second light absorbing portion 164 may be connected between the first light absorbing portion 162 and the first light absorbing device 150. The first light absorbing portion 162 is used for absorbing the second part of light L2 reflected by the photo sensor 140 to avoid a situation that the second part of light L2 reflected by the photo sensor 140 enters the projection lens 130. The second light absorbing portion 164 may adequately shields a gap between the projection lens 130 and the first light absorbing device 150 to avoid a situation that the second part of light L2 reflected by the photo sensor 140 passes through the gap to enter the working liquid 220. In the present embodiment, a light absorbing surface 162a of the first light absorbing portion 162 and a light absorbing surface 164a of the second light absorbing portion 164 may be two planes not parallel to each other. For example, the light absorbing surface 162a of the first light absorbing portion 162 may be selectively parallel to an optical axis A of the projection lens 130, and the light absorbing surface 164a of the second light absorbing portion 164 may be inclined relative to the light absorbing surface 162a of the first light absorbing portion 162. However, the invention is not limited thereto, and in other embodiments, the second light absorbing device 160 may also be designed into other patterns, which are described below with reference of other figures.

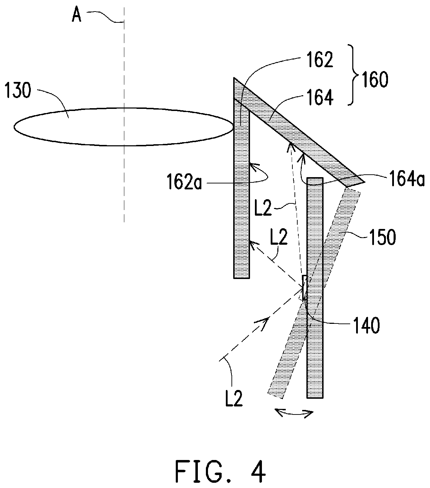

FIG. 4 illustrates rotation of the first light absorbing device 150 of FIG. 3. In the present embodiment, the photo sensor 140 may be fixed on the first light absorbing device 150. The first light absorbing device 150 may drive the photo sensor 140 to rotate, so as to adjust an included angle θ (indicated in FIG. 3) between the second part of light L2 and a normal direction N of a light receiving surface 140a of the photo sensor 140. In the present embodiment, the control unit 300 may adjust the included angle θ between the second part of light L2 and the normal direction N of the light receiving surface 140a of the photo sensor 140 according to sensitivity of the photo sensor 140. To be specific, the lower the sensitivity of the photo sensor 140 is, the smaller the included angle θ is. Therefore, during an assembling process of the 3D printing apparatus 1000, the included angle θ may be adjusted according to the sensitivity of the photo sensor 140, so as to optimize the function of the photo sensor 140 for monitoring the intensity of the light L. After the 3D printing apparatus 1000 is delivered for usage (or after the 3D printing apparatus 1000 is used), if the photosensing capability of the photo sensor 140 is deteriorated (or the sensitivity thereof is decreased), the included angle θ may be decreased to ensure that the photo sensor 140 still plays a good monitoring function.

In the present embodiment, the projection unit 100 may further include an optical device 170. The optical device 170 is disposed on the transmission path of the light L. The optical device 170 reflects the light L coming from the light source 110 to the DMD 120. The first part of light L1 reflected by the DMD 120 may pass through the optical device 170 to reach the projection lens 130. For example, in the present embodiment, the optical device 170 may be a total internal reflection (TIR) prism, though the invention is not limited thereto.

In the present embodiment, the projection unit 100 may further include a light uniforming device 180. The light uniforming device 180 is disposed on the transmission path of the light L, and is located between the light source 110 and the optical device 170. The light uniforming device 180 is used for uniforming the light L emitted by the light source 110, or even adjusting a light shape of the light L, such that the light shape of the light L is similar to a shape (for example, a rectangle) of a working region of the DMD 120, so as to improve usage efficiency of the light L. The working region of the DMD 120 refers to a region where the first micromirrors 122 and the second micromirrors 124 are located. In the present embodiment, the light uniforming device 180 is, for example, a micro-lens array, though the invention is not limited thereto.

In the present embodiment, the projection unit 100 may further include a light converging device 190. The light converging device 190 is disposed on the transmission path of the light L. In the present embodiment, the light converging device 190 is selectively located between the light uniforming device 180 and the optical device 170. Through the light converging device 190, the light L coming from the light source 110 may be converged to the optical device 170, so as to be transmitted to the DMD 120. In the present embodiment, the light converging device 190 is, for example, a lens set, though the invention is not limited thereto.

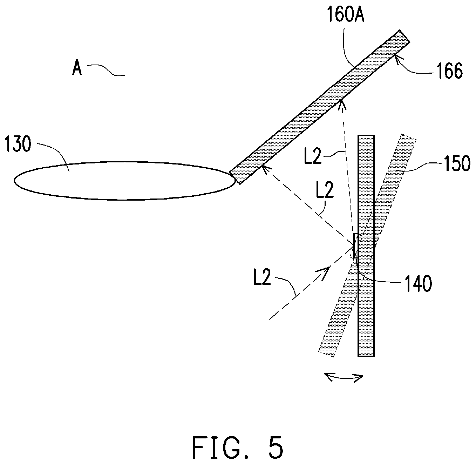

FIG. 5 is an enlarged view of the projection lens 130, the photo sensor 140, the first light absorbing device 150 and a second light absorbing device 160A of the 3D printing device according to another embodiment of the invention. In the embodiment of FIG. 5, a light absorbing surface 166 of the second light absorbing device 160A may be a plane, and the light absorbing surface 166 of the second light absorbing device 160A may be inclined relative to the optical axis A of the projection lens 130. The second light absorbing device 160A has a similar function with that of the aforementioned second light absorbing device 160, and detail thereof is not repeated.

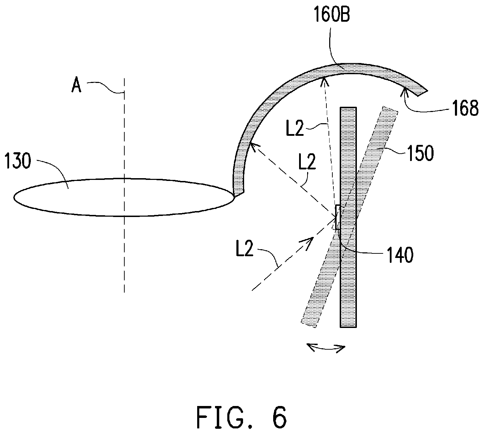

FIG. 6 is an enlarged view of the projection lens 130, the photo sensor 140, the first light absorbing device 150 and a second light absorbing device 160B of the 3D printing device according to still another embodiment of the invention. In the embodiment of FIG. 6, a light absorbing surface 168 of the second light absorbing device 160B may be a curved surface, which is, for example but not limited to, a concave surface. The second light absorbing device 160B has a similar function with that of the aforementioned second light absorbing device 160, and detail thereof is not repeated.

In summary, the 3D printing apparatus of the invention includes a light source, a DMD, a projection lens and a photo sensor. The light source is used for emitting a light. The DMD is disposed on a transmission path of the light, and has a plurality of first micromirrors and a plurality of second micromirrors. The first micromirrors reflect a first part of light to the projection lens. The projection lens projects the first part of light to a working liquid to cure the working liquid. The second micromirrors reflect a second part of light to the outside of the projection lens. The photo sensor is disposed on a transmission path of the second part of light. By monitoring an intensity of the second part of light measured by the photo sensor, it is determined whether an intensity of the light emitted by the light source is decayed. If it is determined that the intensity of the light is decayed, the intensity of the light is increased to an ideal value. In this way, during the 3D printing process, the intensity of the first part of light projected to the working liquid may be maintained to an ideal value, so as to print the stable 3D printing object with good quality. More importantly, since the photo sensor is disposed on the transmission path of the second part of light (i.e. the non-image light), allocation of the photo sensor does not influence an image resolution and/or an image range.

## Claims

1. A three-dimensional printing apparatus (1000), comprising:
a light source (110), emitting a light (L);
a digital micromirror device (120), disposed on a transmission path of the light (L), and having a plurality of first micromirrors (122) and a plurality of second micromirrors (124);
a projection lens (130), wherein the first micromirrors (122) reflect a first part (L1) of the light (L) to the projection lens (130), the projection lens (130) projects the first part (L1) of the light (L) to a working liquid (220) to cure the working liquid, and the second micromirrors (124) reflect a second part (L2) of the light (L) to an outside of the projection lens (130); **characterized by**
a photo sensor (140), disposed on a transmission path of the second part (L2) of the light (L) ;and
a control unit (300), configured to monitor an intensity of the second part (L2) of the light (L) measured by the photo sensor (140) to determine whether an intensity of the light (L) emitted by the light source (110) is decayed.

2. The three-dimensional printing apparatus (1000) as claimed in claim 1, further comprising:
a first light absorbing device (150), wherein the photo sensor (140) is disposed on the first light absorbing device (150).

3. The three-dimensional printing apparatus (1000) as claimed in claim 2, wherein the first light absorbing device (150) is adapted to rotate to adjust an included angle (θ) between the second part (L2) of the light (L) and a normal direction (N) of a light receiving surface (140a) of the photo sensor (140).

4. The three-dimensional printing apparatus (1000) as claimed in claim 1, further comprising:
a second light absorbing device, disposed on the transmission path of the second part of the light reflected by the photo sensor.

5. The three-dimensional printing apparatus (1000) as claimed in claim 4, wherein the second light absorbing device (160, 160A, 160B) is located between the projection lens (130) and the first light absorbing device (140).

6. The three-dimensional printing apparatus (1000) as claimed in claim 4, wherein a light absorbing surface (162a, 164a, 166, 168) of the second light absorbing device (160, 160A, 160B) comprises at least one of a plane or a curved surface.

7. The three-dimensional printing apparatus (1000) as claimed in claim 6, wherein the curved surface (168) comprises a concave surface.

8. The three-dimensional printing apparatus (1000) as claimed in claim 1, further comprising:
an optical device (170), disposed on the transmission path of the light (L), wherein the optical device (170) reflects the light (L) coming from the light source (110) to the digital micromirror device (120), and the first part (L1) of the light (L) passes through the optical device (170) and is transmitted to the projection lens (130).

9. The three-dimensional printing apparatus (1000) as claimed in claim 8, further comprising:
a light uniforming device (180), disposed on the transmission path of the light (L), and located between the light source (110) and the optical device (170); and
a light converging device (190), disposed on the transmission path of the light (L), and located between the light uniforming device (110) and the optical device (170).

10. The three-dimensional printing apparatus (1000) as claimed in claim 1, wherein the photo sensor (140) is not disposed on the transmission path of the first part (L1) of the light (L) transmitted to the projection lens (130).

## Patentansprüche

1. Eine dreidimensionale Druckvorrichtung (1000), umfassend:
eine Lichtquelle (110), die ein Licht (L) ausstrahlt;
eine digitale Mikrospiegelvorrichtung (120), die auf einem Übertragungsweg des Lichts (L) angeordnet ist und eine Vielzahl von ersten Mikrospiegeln (122) und eine Vielzahl von zweiten Mikrospiegeln (124) aufweist;
ein Projektionslinse (130), wobei die ersten Mikrospiegel (122) einen ersten Teil (L1) des Lichts (L) zu der Projektionslinse (130) reflektieren, die Projektionslinse (130) den ersten Teil (L1) des Lichts (L) auf eine Arbeitsflüssigkeit (220) projiziert, um die Arbeitsflüssigkeit auszuhärten, und die zweiten Mikrospiegel (124) einen zweiten Teil (L2) des Lichts (L) zu einer Außenseite des Projektionslinse (130) reflektieren; **gekennzeichnet durch**
einem Fotosensor (140), der auf einem Übertragungsweg des zweiten Teils (L2) des Lichts (L) angeordnet ist; und
eine Steuereinheit (300), die so konfiguriert ist, dass sie eine Intensität des zweiten Teils (L2) des Lichts (L), die von dem Fotosensor (140) gemessen wird, überwacht, um zu bestimmen, ob eine Intensität des von der Lichtquelle (110) emittierten Lichts (L) gemindert ist.

2. Die dreidimensionale Druckvorrichtung (1000) nach Anspruch 1, weiter umfassend:
eine erste lichtabsorbierende Vorrichtung (150), wobei der Fotosensor (140) auf der ersten lichtabsorbierenden Vorrichtung (150) angeordnet ist.

3. Die dreidimensionale Druckvorrichtung (1000) nach Anspruch 2, wobei die erste lichtabsorbierende Vorrichtung (150) so ausgelegt ist, dass sie sich dreht, um einen eingeschlossenen Winkel (θ) zwischen dem zweiten Teil (L2) des Lichts (L) und einer normalen Richtung (N) einer Lichtempfangsfläche (140a) des Fotosensors (140) einzustellen.

4. Die dreidimensionale Druckvorrichtung (1000) nach Anspruch 1, weiter umfassend:
eine zweite lichtabsorbierende Vorrichtung, die auf dem Übertragungsweg des zweiten Teils des vom Fotosensor reflektierten Lichts angeordnet ist.

5. Die dreidimensionale Druckvorrichtung (1000) nach Anspruch 4, wobei die zweite lichtabsorbierende Vorrichtung (160, 160A, 160B) zwischen der Projektionslinse (130) und der ersten lichtabsorbierenden Vorrichtung (140) angeordnet ist.

6. Dreidimensionale Druckvorrichtung (1000) nach Anspruch 4, wobei eine lichtabsorbierende Oberfläche (162a, 164a, 166, 168) der zweiten lichtabsorbierenden Vorrichtung (160, 160A, 160B) mindestens eine ebene oder eine gekrümmte Oberfläche aufweist.

7. Die dreidimensionale Druckvorrichtung (1000) nach Anspruch 6, wobei die gekrümmte Oberfläche (168) eine konkave Oberfläche aufweist.

8. Die dreidimensionale Druckvorrichtung (1000) nach Anspruch 1, weiter umfassend:
eine optische Vorrichtung (170), die auf dem Übertragungsweg des Lichts (L) angeordnet ist, wobei die optische Vorrichtung (170) das von der Lichtquelle (110) kommende Licht (L) zu der digitalen Mikrospiegelvorrichtung (120) reflektiert und der erste Teil (L1) des Lichts (L) die optische Vorrichtung (170) durchläuft und zu der Projektionslinse (130) übertragen wird.

9. Die dreidimensionale Druckvorrichtung (1000) nach Anspruch 8, ferner umfassend:
eine Lichtausgleichsvorrichtung (180), die auf dem Übertragungsweg des Lichts (L) angeordnet ist und sich zwischen der Lichtquelle (110) und der optischen Vorrichtung (170) befindet; und
eine Lichtkonvergenzvorrichtung (190), die auf dem Übertragungsweg des Lichts (L) angeordnet ist und sich zwischen der Lichtausgleichsvorrichtung (110) und der optischen Vorrichtung (170) befindet.

10. Die dreidimensionale Druckvorrichtung (1000) nach Anspruch 1, bei der der Fotosensor (140) nicht auf dem Übertragungsweg des ersten Teils (L1) des zur Projektionslinse (130) übertragenen Lichts (L) angeordnet ist.

## Revendications

1. Une imprimante tridimensionnelle (1000), comprenant:
une source de lumière (110), émettant une lumière (L);
un dispositif de micromiroir numérique (120), disposé sur un trajet de transmission de la lumière (L), et ayant une pluralité de premiers micromiroirs (122) et une pluralité de seconds micromiroirs (124);
une lentille de projection (130), dans laquelle les premiers micromiroirs (122) réfléchissent une première partie (L1) de la lumière (L) vers la lentille de projection (130), la lentille de projection (130) projette la première partie (L1) de la lumière (L) à un liquide de travail (220) pour durcir le liquide de travail, et les seconds micromiroirs (124) réfléchissent une seconde partie (L2) de la lumière (L) vers l'extérieur de la lentille de projection (130); **caractérisée par**
un photodétecteur (140), disposé sur un trajet de transmission de la seconde partie (L2) de la lumière (L) ; et
une unité de commande (300), configurée pour contrôler une intensité de la seconde partie (L2) de la lumière (L) mesurée par le photodétecteur (140) pour déterminer si une intensité de la lumière (L) émise par la source lumineuse (110) décline.

2. L'imprimante tridimensionnelle (1000) telle que revendiquée dans la revendication 1, comprenant en outre:
un premier dispositif absorbant la lumière (150), dans lequel le photodétecteur (140) est disposé sur le premier dispositif absorbant la lumière (150).

3. L'imprimante tridimensionnelle (1000) telle que revendiquée dans la revendication 2, dans lequel le premier dispositif absorbant la lumière (150) est adapté pour tourner et ajuster un angle inclus (θ) entre la deuxième partie (L2) de la lumière (L) et une direction normale (N) d'une surface de réception de lumière (140a) du photodétecteur (140).

4. L'imprimante tridimensionnelle (1000) telle que revendiquée dans la revendication 1, comprenant en outre:
un deuxième dispositif absorbant la lumière, disposé sur le trajet de transmission de la seconde partie de la lumière réfléchie par le photodétecteur.

5. L'imprimante tridimensionnelle (1000) telle que revendiquée dans la revendication 4, dans lequel le deuxième dispositif absorbant la lumière (160, 160A, 160B) est situé entre la lentille de projection (130) et le premier dispositif absorbant la lumière (140).

6. L'imprimante tridimensionnelle (1000) telle que revendiquée dans la revendication 4, dans lequel une surface absorbant la lumière (162a, 164a, 166, 168) du deuxième dispositif absorbant la lumière (160, 160A, 160B) comprend au moins un plan ou une surface courbe.

7. L'imprimante tridimensionnelle (1000) telle que revendiquée dans la revendication 6, dans lequel la surface courbe (168) comprend une surface concave.

8. L'imprimante tridimensionnelle (1000) telle que revendiquée dans la revendication 1, comprenant en outre:
un dispositif optique (170), disposé sur le trajet de transmission de la lumière (L), dans lequel le dispositif optique (170) réfléchit la lumière (L) provenant de la source lumineuse (110) vers le dispositif de micromiroir numérique (120), et la première partie (L1) de la lumière (L) traverse le dispositif optique (170) et est transmise à la lentille de projection (130).

9. L'imprimante tridimensionnelle (1000) telle que revendiquée dans la revendication 8, comprenant en outre:
un dispositif d'uniformisation de lumière (180), disposé sur le trajet de transmission de la lumière (L), et situé entre la source de lumière (110) et le dispositif optique (170); et
et un dispositif convergent de lumière (190), disposé sur le trajet de transmission de la lumière (L), et situé entre le dispositif d'uniformisation de lumière (110) et le dispositif optique (170).

10. L'imprimante tridimensionnelle (1000) telle que revendiquée dans la revendication 1, dans lequel le photodétecteur (140) n'est pas disposé sur le trajet de transmission de la première partie (L1) de la lumière (L) transmise à l'objectif de projection (130) .
